# EUROPEAN PATENT SPECIFICATION

(11) **EP 3 385 211 B1**
(45) Date of publication and mention of the grant of the patent: **20.11.2019**
(21) Application number: 17164484.2
(22) Date of filing: 03.04.2017
(51) Int. Cl.: B66C 23/80, B60S 9/12

(54) **A STABILIZER LEG DEVICE**
STABILISATORBEINVORRICHTUNG
DISPOSITIF DE PIED STABILISATEUR

(43) Date of publication of application: 10.10.2018
(73) Proprietor: Cargotec Patenter AB, 341 81 Ljungby (SE)
(72) Inventor: Nylander, Erik, SE-824 92 Hudiksvall (SE)
(74) Representative: Bjerkéns Patentbyrå KB (Gävle)

(56) References cited:
- WO-A1-2012/056242
- CH-A- 528 993
- DE-A1- 3 409 476
- DE-U1- 29 704 212

## Description

### TECHNICAL FIELD OF THE INVENTION AND BACKGROUND ART

The present invention relates to a stabilizer leg device with a stabilizer leg to be moved downwards from an object, such as a crane vehicle, so as to stabilize this object by bearing through a footplate secured to a lower end of the stabilizer leg onto a support layer on which the object is resting.

Such a stabilizer leg device is normally a part of a support arrangement fixed to such an object, such as a moveable crane construction, by a frame structure to which one or more such stabilizer leg devices are secured for stabilizing the crane construction when this has to carry out work.

Such stabilizer leg devices of this type are known through EP 2 055 664 A1 and JP 2013075753 and the movement of the first stabilizer leg member in the form of a vertical displacement with respect to said holder and by that with respect to the object, such as the crane vehicle, constitutes an advantage with respect to stabilizer leg devices where the stabilizer leg is tilted around a horizontal axis to and from a working position of the stabilizer leg device, which may be problematic when the space for parking said object with the stabilizer leg device or devices is limited. A stabilizer leg device with a stabilizer leg to be moved downwards from an object, such as a crane vehicle so as to stabilize this object is known from WO 2012 056 242. This document discloses the preamble of claim 1.

Furthermore, the displacement of the first stabilizer leg member with respect to the holder by the action of said first power member, such as an hydraulic cylinder, to a lower end position and then locking the first stabilizer leg member with respect to the holder in this position makes it possible to use a rather "weak" such first power member and by that with a low demand of space where space is limited.

In spite of these advantages of the stabilizer leg devices known the locking arrangements thereof leave a great deal to desire with respect to reliability and simplicity of obtaining locking and unlocking states thereof, since these actions have to be carried out by man power, such as inserting a pin in a recess or removing it therefrom.

### SUMMARY OF THE INVENTION

The object of the present invention is to provide a stabilizer leg device of the type defined in the introduction being improved in at least some aspect with respect to such stabilizer leg devices already known.

This object is according to the invention obtained by providing such a stabilizer leg device with the features listed in the characterizing part of appended patent claim 1.

An automatic locking of said first stabilizer leg member in the lower end position in the working position of the stabilizer leg device and an automatic unlocking when transferring the stabilizer leg device from said working position is obtained through these features. The reliability of the locking and unlocking actions will be high and time and trouble are saved by requiring no hand-operation for obtaining this. Accordingly, this is enabled by a member interconnecting the locking arrangement and the second stabilizer leg member to make the state of the locking arrangement dependent upon the vertical distance of the footplate to the first stabilizer leg member by automatically transferring the locking arrangement into the locking state upon displacement of the footplate downwards towards a working position of the stabilizer leg device and reaching a determined extension degree of the second stabilizer leg member and upon retracting the second stabilizer leg member from a working position of the stabilizer leg device upon passing said determined extension degree automatically transfer the locking arrangement into an unlocked state enabling upwards movement of the first stabilizer leg member with respect to the holder.

According to an embodiment of the invention said interconnecting member comprises at least one stiff elongated member, such as a rod, having one end connected to said footplate. This constitutes a simple and reliable way of accomplishing an interconnection of the locking arrangement and the second stabilizer leg member to make the state of the locking arrangement dependent upon the vertical distance of the footplate to the first stabilizer leg member. It is pointed out that "connected to said footplate" here is to be interpreted to cover also the case in which one end of said stiff elongated member is operatively connected to the footplate as long as the extension degree of the second stabilizer leg member does not exceed said determined extension degree, but the end of the stiff elongated member may leave contact with the footplate for extensions beyond said determined extension degree.

According to another embodiment of the invention said at least one stiff elongated member has an upper end connected to one of said two locking members to cause movement thereof upon movement of the second stabilizer leg member with respect to the first stabilizer leg member. The two locking members of the locking arrangement may by this be moved between a locked and unlocked state by movement of the stiff elongated member due to movement of the second stabilizer leg member with respect to the first stabilizer leg member.

According to another embodiment of the invention the locking arrangement comprises at least one spring member storing potential energy in said unlocked state, and said interconnecting member is configured to release the spring member upon extension of the second stabilizer leg member from the first stabilizer leg member for urging one of said locking members into engagement with the other locking member and keeping the locking members in the locking state under pretention. This is a favorable way of obtaining automatic locking and unlocking of the first stabilizer leg member with respect to the holder.

According to another embodiment of the invention the locking arrangement is configured to obtain said locking engagement by a movement of one of the locking members transversally to the vertical extension of the stabilizer leg.

According to another embodiment of the invention the interconnecting member is configured to cause movement of said second locking member upon extension and retraction of the second stabilizer leg member with respect to the first stabilizer leg member. Said first locking member may then according to another embodiment of the invention comprise a recess in the first stabilizer leg member to be engaged by the second locking member in said locking state. Alternatively, the interconnecting member may in another embodiment of the invention be configured to cause movement of the first locking member upon extension and retraction of the second stabilizer leg member with respect to the first stabilizer leg member.

In a further development of the embodiment last mentioned, the second locking member comprises a recess in the holder and the interconnecting member is configured to upon extension and retraction of the second stabilizer leg member with respect to the first stabilizer leg member move the first blocking member into and out of locking state engagement in the holder recess.

The first locking member may then according to another embodiment of the invention be a non-circular, such as oval, plate-like member and the second locking member will then comprise a correspondingly shaped opening into a room in the holder, said plate-like member is configured to be received in said room in the lower end position of the first stabilizer leg member, and the control arrangement is configured to obtain said locking state by causing turning of said plate-like member around a center axis of the first stabilizer leg member.

According to another embodiment of the invention a power cylinder of the second power member forms the first stabilizer leg member and the second stabilizer leg member is a piston rod belonging to that power cylinder, in which one or both said power members may be hydraulic cylinders.

The invention also relates to a support arrangement and a moveable crane construction according to the appended claims directed to a support arrangement and a moveable crane construction. The advantages of such an arrangement and such a construction appear clearly from the above discussion of the stabilizer leg device according to the present invention.

Further advantages as well as advantageous features of the invention will appear from the description following below.

### BRIEF DESCRIPTION OF THE DRAWINGS

With reference to the appended drawings, below follows a specific description of embodiments of the invention cited as examples.

In the drawings:
- Fig.1: is a schematic view of a crane vehicle provided with two stabilizer leg devices according to the invention in an inactive state,
- Fig. 2: is a view of the crane vehicle in Fig. 1 with the two stabilizer leg devices in a working position stabilizing the vehicle by bearing through a footplate onto the ground,
- Fig. 3: is a view of a stabilizer leg device according to a first embodiment of the invention in a parking position corresponding to that of Fig. 1,
- Fig. 4: is a view corresponding to Fig. 3 with the first stabilizer leg member of the stabilizer leg device in a lower end position with respect to the holder,
- Fig. 5: is a view of the stabilizer leg device in the position in Fig. 4 in the direction of the arrow A,
- Fig. 6: is a view corresponding to Fig. 4 of the stabilizer leg device in a position in which the locking arrangement thereof automatically locks the first stabilizer leg member with respect to the holder,
- Fig. 7: is a view of the stabilizer leg device in a working position with the footplate resting on the ground,
- Fig. 8: is a view corresponding to Fig. 5 of the stabilizer leg device in the position shown in Fig. 7,
- Figs. 9 and 10: are cross-section views through the holder and the first stabilizer leg member of the stabilizer leg device with the locking arrangement thereof in an unlocked state and a locked state, respectively,
- Figs. 11 and 12: are views of a part of a stabilizer leg device according to a second embodiment of the invention with the locking arrangement thereof in an unlocked state corresponding to Figs. 5 and 9, and
- Figs. 13 and 14: are view corresponding to Figs. 11 and 12, respectively, of the stabilizer leg device with the locking arrangement in the locked state.

### DETAILED DESCRIPTION OF EMBODIMENTS OF THE INVENTION

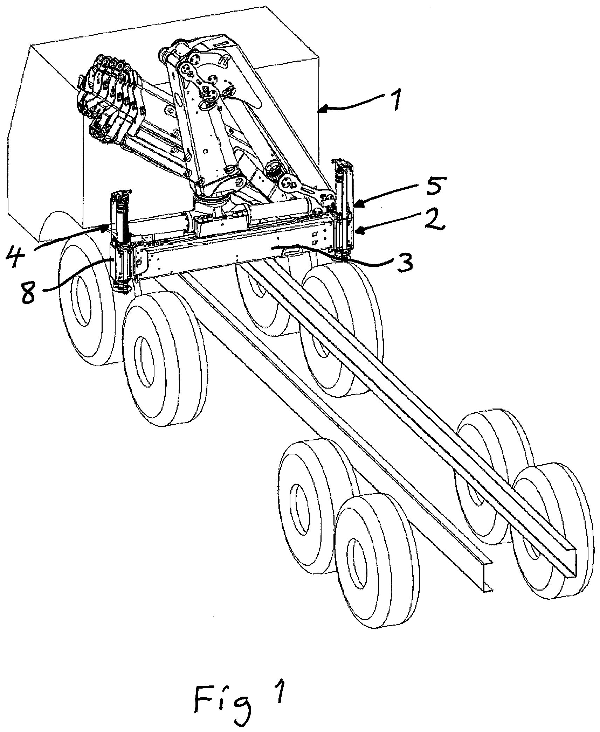

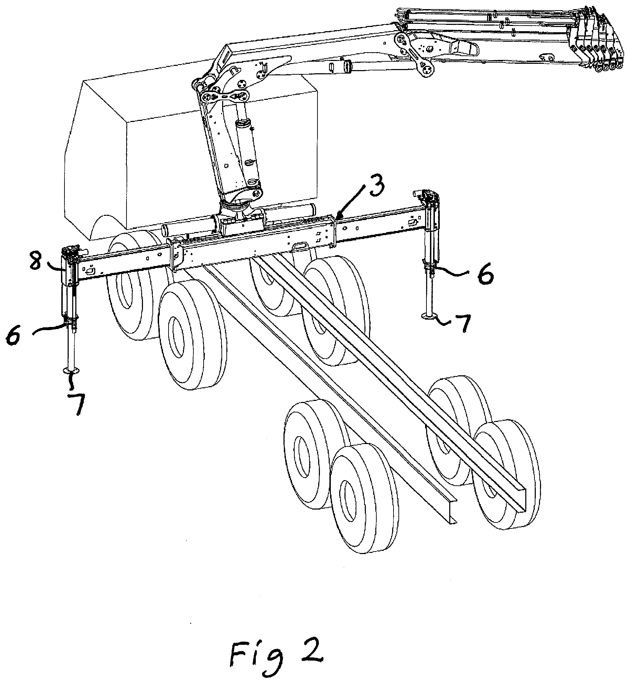

Fig. 1 shows schematically an object 1 in the form of a crane vehicle to which a support arrangement 2 is fixed by having a frame structure 3 thereof fixed to the frame work of the vehicle. The support arrangement is provided with two stabilizer leg devices 4, 5 according to a first embodiment of the invention. Each stabilizer leg device has a stabilizer leg 6 to be moved downwards from the crane vehicle so as to stabilize the crane vehicle by bearing through a footplate 7 secured to a lower end of the stabilizer leg onto the ground on which the vehicle is resting in a working position of the stabilizer leg device as shown in Fig. 2.

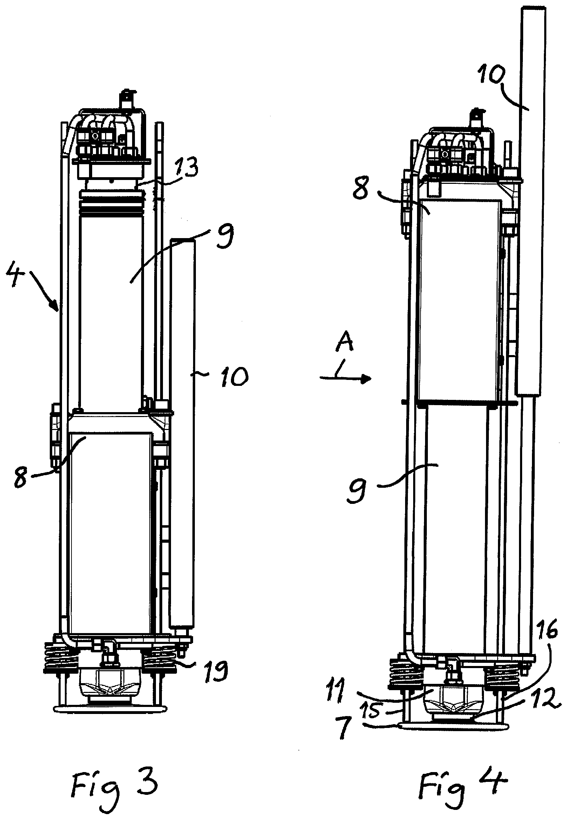

The design and function of a stabilizer leg device according to the first embodiment of the invention will now be described while making reference to Figs. 3-10. The device comprises a holder 8 configured to be fixed with respect to the crane vehicle, here by being secured to the frame structure 3 of the support arrangement as shown in Figs. 1 and 2. The holder 8 is configured to receive and hold a first member 9 of the stabilizer leg vertically displaceable with respect to the holder. A first power member 10, such as a hydraulic cylinder, is configured to act between the crane vehicle by means of the holder and the first stabilizer leg member 9 below the holder by varying its length so as to displace the first stabilizer leg member vertically upwards and downwards with respect to the holder. Fig. 3 illustrates the stabilizer leg device 4 in a parking position corresponding to the position shown in Fig. 1, whereas Fig. 4 shows how the first power member 10 has displaced the first stabilizer leg member 9 with respect to the holder 8 down to a lower end position. The device also comprises a second power member 11 belonging to the stabilizer leg and configured to change the distance between an upper end of the first stabilizer leg member and the footplate 7 by varying its length and by that extend or retract a second stabilizer leg member 12 provided with the footplate with respect to the first stabilizer leg member 9. The second power member has said first stabilizer leg member 9 as hydraulic cylinder and the second stabilizer leg member 12 as piston rod belonging to that power cylinder.

The stabilizer leg device has also a locking arrangement which will now be described while making reference to all Figs 3-10. This locking arrangement is configured to in a working position of the stabilizer leg device as shown in Fig. 2 with the first stabilizer leg member in a lower end position lock the first stabilizer leg member with respect to the holder against vertical movements with respect thereto. The locking arrangement comprises for this sake a first locking member in the form of a recess 13 or groove in the first stabilizer leg member 9 and a second locking member 14 on the holder configured to engage into the recess 13 in a locking state of the locking arrangement. The device has a control arrangement configured to transfer the locking arrangement into a locking state by causing mutual engagement of the locking members and into an unlocked state by releasing the engagement of the locking members.

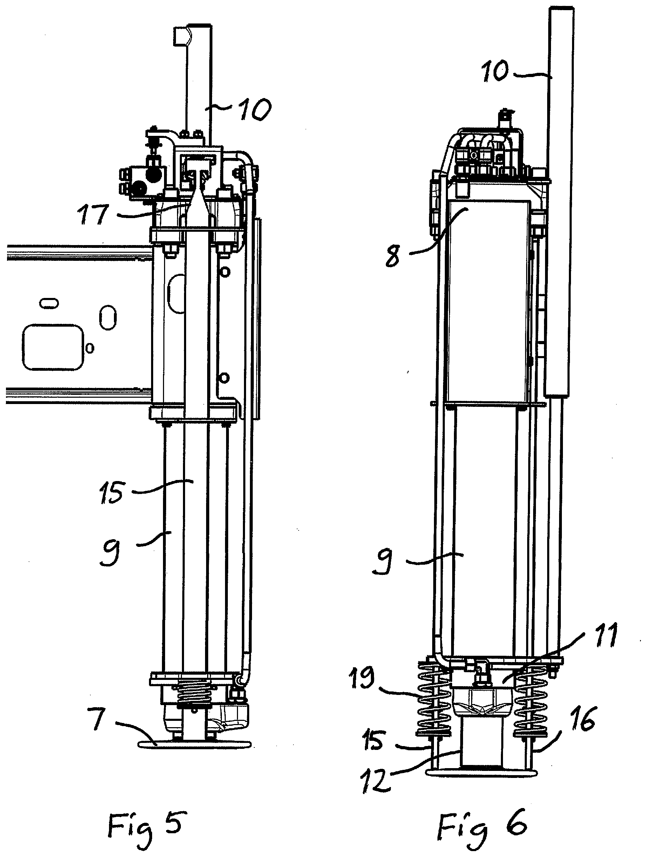

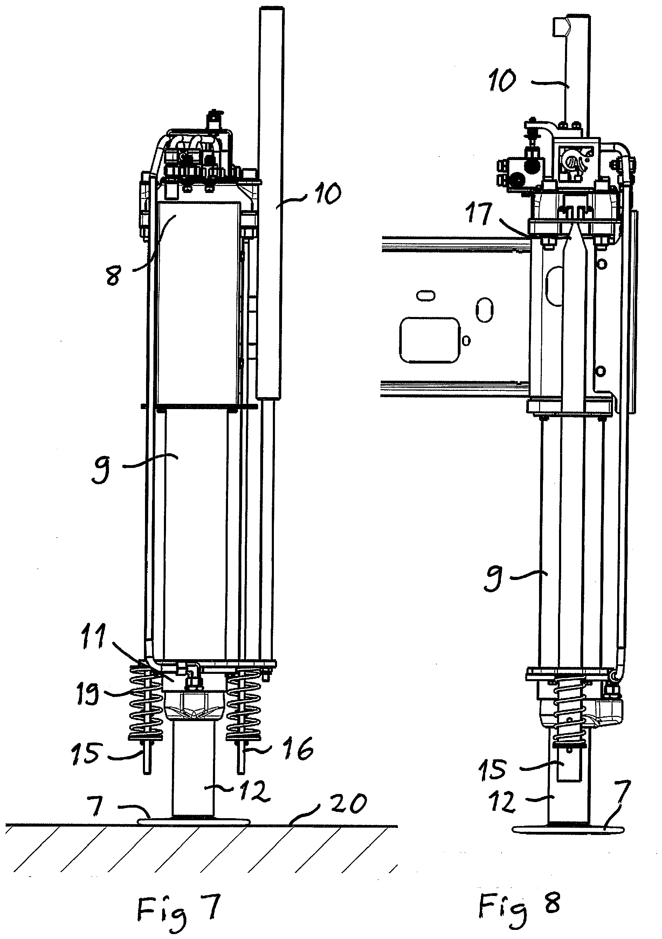

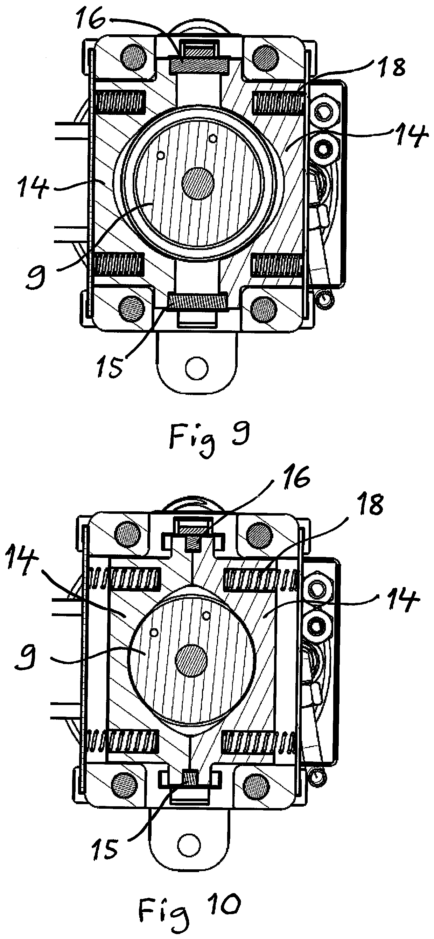

Said control arrangement comprises a member interconnecting the locking arrangement and the second stabilizer leg member to make the state of the locking arrangement dependent upon the vertical distance of the footplate 7 to the first stabilizer leg member by automatically transferring the locking arrangement into said locking state upon displacing the footplate downwards towards a working position of the stabilizer leg device and reaching a determined extension degree of the second stabilizer leg member shown in Fig. 6. The interconnecting member comprises two stiff elongating members 15, 16, such as rods, having one end bearing under pretension onto the footplate 7 in the retracted position of the second stabilizer leg member 12 as shown in Figs. 3-5. Each elongated member 15, 16 has a cross-section with an upper end portion 17 tapering towards the end. It is shown in Fig. 5 and Fig. 9 how a full cross-section portion of the stiff elongated members 15 and 16 projects through the locking arrangement and keeps the second locking members 14 apart against action of spring members 18 storing potential energy in the unlocked state of the locking arrangement. When the second power member 11 moves the second stabilizer leg member 12 and by that the footplate 7 downwards from this position the stiff elongated members 15, 16 will follow the footplate downwards thanks to spring members 19 to the position shown in Fig. 6, in which the end portions 17 of the stiff elongated members 15, 16 will be arranged between the second locking members 14 which will by that be urged by the spring members 18 to move to a locked position shown in Fig. 10 by engaging into the recess 13 in the first stabilizer leg member. This is also illustrated by the position of the stiff elongated member 15 shown in Fig. 8.

Thus, when the second stabilizer leg member 12 and by that the footplate 7 reaches the position shown in Fig. 6 the first stabilizer leg member will automatically be locked with respect to the holder, and further extension of the stabilizer leg will be obtained by displacing the second stabilizer leg member 12 downwards with respect to the first stabilizer leg member and by that the holder and the frame structure of the support arrangement. Such extension will then be carried out until a working position of the stabilizer leg device is reached by reaching the ground by the footplate 7. The function of the locking arrangement means that the first power member 10 has not to be dimensioned to withstand any forces in the working position of the stabilizer leg device shown in Fig. 7, but the second power member 11 will alone take care of this.

When the stabilizer leg device is to be transferred from the working position shown in Fig. 2 to a parking or driving position shown in Fig. 1 the second power member 11 is controlled to retract the second stabilizer leg member 12 from the position shown in Fig. 7, in which it will when passing said determined extension degree shown in Fig. 6 bring the footplate 7 to hit the elongated stiff members 15, 16 and automatically transfer the locking arrangement into an unlocked state by moving these members 15, 16 upwards enabling upwards movement of the first stabilizer leg member with respect to the holder by actuation of the first power member 10.

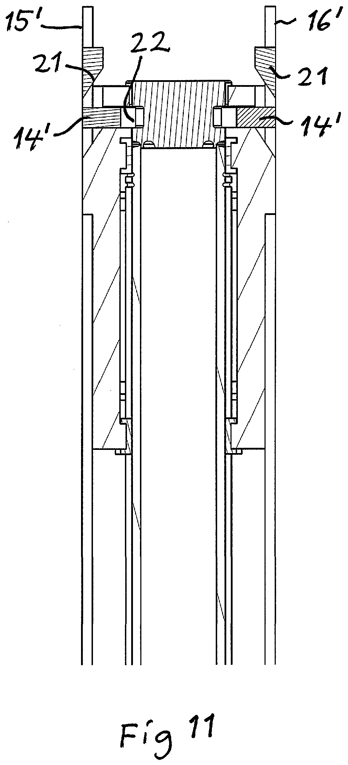

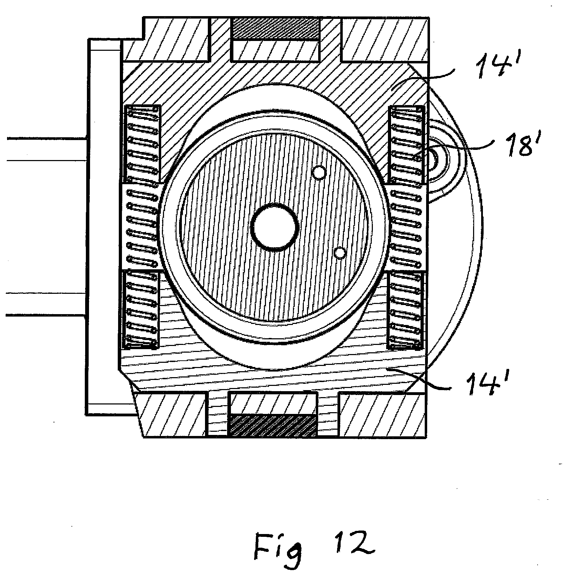

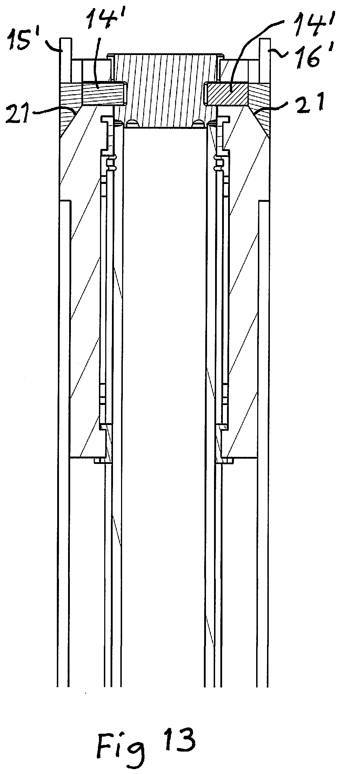

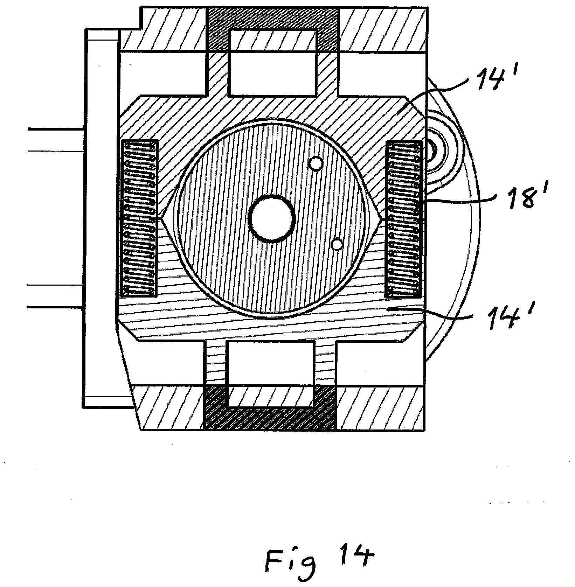

Fig. 11-14 illustrate the function of the locking arrangement in a stabilizer leg device according to a second embodiment of the invention in which spring members 18' are urging first locking members 14' apart in an unlocked state as shown in Figs. 11 and 12. Stiff elongated members 15', 16' moved downwards from the parking position have wedge portions 21 acting upon the second locking member 14' when reaching the position shown in Fig. 13 and so as to then automatically lock the first stabilizer leg member with respect to the holder by moving the first locking members 14' into a recess 22 in the holder as also shown in Fig. 14. Retraction of the stabilizer leg from the working position will then when passing the position shown in Figs. 13 and 14 result in an automatic transfer of the locking arrangement into the unlocked state enabling retraction of the stabilizer leg to the parking position shown in Fig. 1.

The invention is of course in no way restricted to the embodiments described above, since many possibilities for modifications thereof are likely to be obvious to one skilled in the art without having to deviate from the scope of invention defined in the appended claims.

The object to be stabilized by a device according to the invention may be any type of object needing such a stabilization to stand safely without moving or any risk to tilt.

## Claims

1. A stabilizer leg device with a stabilizer leg (6) to be moved downwards from an object (1), such as a crane vehicle, so as to stabilize this object by bearing through a footplate (7) secured to a lower end of the stabilizer leg onto a support layer (20) on which the object is resting, said device comprising
• a holder (8) configured to be fixed with respect to said object and to receive and hold a first member (9) of the stabilizer leg (6) vertically displaceable with respect to the holder,
• a first power member (10) configured to act between said object and said first stabilizer leg member (9) below the holder (8) by varying its length so as to displace said first stabilizer leg member (9) vertically upwards and downwards with respect to the holder (8), **characterised in that** a second power member (11) belonging to the stabilizer leg and configured to change the distance between an upper end of the first stabilizer leg member (9) and said footplate (7) by varying its length and by that extend or retract a second stabilizer leg member (12) provided with the footplate with respect to said first stabilizer leg member, and
• a locking arrangement configured, in a working position of the stabilizer leg device with the first stabilizer leg member (9) in a lower end position, to lock the first stabilizer leg member with respect to the holder (8) against vertical movements with respect thereto,
wherein the locking arrangement comprises a first locking member (13) on the first stabilizer leg member (9) and a second locking member (14) on the holder (8), that the device further comprises a control arrangement configured to transfer the locking arrangement into a locking state by causing mutual engagement of said locking members and into an unlocked state by releasing the engagement of the locking members, and that the control arrangement comprises a member (15, 16, 15', 16') interconnecting the locking arrangement and said second stabilizer leg member (12) to make the state of the locking arrangement dependent upon the vertical distance of the footplate (7) to the first stabilizer leg member (9) by automatically transferring the locking arrangement into said locking state upon displacing the footplate (7) downwards towards a working position of the stabilizer leg device and reaching a determined extension degree of the second stabilizer leg member (12) and upon retracting the second stabilizer leg member from a working position of the stabilizer leg device upon passing said determined extension degree automatically transfer the locking arrangement into an unlocked state enabling upwards movement of the first stabilizer leg member (9) with respect to the holder (8).

2. A stabilizer leg device according to claim 1, **characterized in that** said interconnecting member comprises at least one stiff elongated member (15, 16, 15', 16'), such as a rod, having one end connected to said footplate (7).

3. A stabilizer leg device according to claim 2, **characterized in that** said at least one stiff elongated member (15, 16, 15', 16') has an upper end connected to one of said two locking members to cause movement thereof upon movement of the second stabilizer leg member (12) with respect to the first stabilizer leg member (9).

4. A stabilizer leg device according to any of the preceding claims, **characterized in that** the locking arrangement comprises at least one spring member (18) storing potential energy in said unlocked state, and that said interconnecting member (15, 16) is configured to release the spring member upon extension of the second stabilizer leg member (12) from the first stabilizer leg member (9) for urging one (14) of said locking members into engagement with the other locking member (13) and keeping the locking members in the locking state under pretension.

5. A stabilizer leg device according to claim 4, **characterized in that** the locking arrangement is configured to obtain said locking engagement by a movement of one (14, 14') of the locking members transversally to the vertical extension of the stabilizer leg (6).

6. A stabilizer leg device according to any of the preceding claims, **characterized in that** the interconnecting member (15, 16) is configured to cause movement of said second locking member (14) upon extension and retraction of the second stabilizer leg member (12) with respect to the first stabilizer leg member (9).

7. A stabilizer leg device according to claims 6, **characterized in that** said first locking member comprises a recess (13) in the first stabilizer leg member (9) to be engaged by the second locking member (14) in said locking state.

8. A stabilizer leg device according to any of claims 1-5, **characterized in that** the interconnecting member (15', 16') is configured to cause movement of the first locking member (14') upon extension and retraction of the second stabilizer leg member (12) with respect to the first stabilizer leg member (9).

9. A stabilizer leg device according to claim 8, **characterized in that** the second locking member comprises a recess (22) in the holder (8) and the interconnecting member (15', 16') is configured to upon extension and retraction of the second stabilizer leg member (12) with respect to the first stabilizer leg member (9) move the first locking member (14') into and out of locking state engagement in the holder recess (22).

10. A stabilizer leg device according to claim 9, **characterized in that** said first locking member is an non-circular, such as oval, plate-like member and the second locking member comprises a correspondingly shaped opening into a room in the holder, that said plate-like member is configured to be received in said room in the lower end position of the first stabilizer leg member, and that the control arrangement is configured to obtain said locking state by causing turning of said plate-like member around a center axis of the first stabilizer leg member.

11. A stabilizer leg device according to any of the preceding claims, **characterized in that** a power cylinder of said second power member (11) forms the first stabilizer leg member (9) and the second stabilizer leg member (12) is a piston rod belonging to that power cylinder.

12. A stabilizer leg device according to claims 11, **characterized in that** one or both said power members (10, 11) are hydraulic cylinders.

13. A support arrangement configured to be fixed to an object, such as a crane vehicle, so as to give this object (1) support from a support layer (20) on which the object is resting, **characterized in that** the arrangement comprises a frame structure (3) configured to be fixed to a said object and at least one stabilizer leg device (4, 5) according to any of the preceding claims having the holder (8) thereof secured to the frame structure.

14. A moveable crane construction, such as a crane vehicle, **characterized in that** it comprises a support arrangement (2) according to claim 13.

## Patentansprüche

1. Stabilisatorbeinvorrichtung mit einem Stabilisatorbein (6), das von einem Objekt (1), wie einem Kranfahrzeug, abwärts bewegbar ist, um so dieses Objekt durch Abstützung mit einer Fußplatte (7), die an einem unteren Ende des Stabilisatorbeins befestigt ist, auf einer Stützschicht (20) zu stabilisieren, auf der das Objekt aufliegt, wobei die Vorrichtung umfasst:
- einen Halter (8), der zur Befestigung in Bezug auf das Objekt und zur Aufnahme und zum Halten eines ersten Elements (9) des Stabilisatorbeins (6) vertikal verstellbar in Bezug auf den Halter konfiguriert ist,
- ein erstes Kraftelement (10), das derart konfiguriert ist, zwischen dem Objekt und dem ersten Stabilisatorbeinelement (9) unterhalb des Halters (8) durch Änderung seiner Länge zu wirken, um so das erste Stabilisatorbeinelement (9) vertikal aufwärts und abwärts in Bezug auf den Halter (8) zu verstellen,
**dadurch gekennzeichnet, dass**
ein zweites Kraftelement (11) zu dem Stabilisatorbein gehört und derart konfiguriert ist, die Distanz zwischen einem oberen Ende des ersten Stabilisatorbeinelements (9) und der Fußplatte (7), durch Änderung seiner Länge, zu ändern, so dass ein zweites Stabilisatorbeinelement (12), das mit der Fußplatte versehen ist, in Bezug auf das erste Stabilisatorbeinelement ausfährt und sich zurückzieht, und
- eine Verriegelungsanordnung, die in einer Arbeitsposition der Stabilisatorbeinvorrichtung, wenn sich das erste Stabilisatorbeinelement (9) in einer unteren Endposition befindet, konfiguriert ist, das erste Stabilisatorbeinelement in Bezug auf den Halter (8) gegen vertikale Bewegungen in Bezug darauf zu verriegeln,
wobei die Verriegelungsanordnung ein erstes Verriegelungselement (13) an dem ersten Stabilisatorbeinelement (9) und ein zweites Verriegelungselement (14) an dem Halter (8) umfasst, dass die Vorrichtung ferner eine Steueranordnung umfasst, die derart konfiguriert ist, die Verriegelungsanordnung in einen Verriegelungszustand zu übertragen, indem ein wechselseitiger Eingriff der Verriegelungselemente bewirkt wird, und in einen entriegelten Zustand zu übertragen, indem der Eingriff der Verriegelungselemente freigegeben ist, und dass die Steueranordnung ein Element (15, 16, 15', 16') umfasst, dass die Verriegelungsanordnung und das zweite Stabilisatorbeinelement (12) miteinander verbindet, um den Zustand der Verriegelungsanordnung von der Vertikaldistanz der Fußplatte (7) zu dem ersten Stabilisatorbeinelement (9) abhängig zu machen, indem die Verriegelungsanordnung automatisch in den Verriegelungszustand bei Verstellen der Fußplatte (7) abwärts in Richtung einer Arbeitsposition der Stabilisatorbeinvorrichtung übertragen wird und ein vorbestimmter Ausfahrgrad des zweiten Stabilisatorbeinelements (12) erreicht wird, und bei Zurückziehen des zweiten Stabilisatorbeinelements von einer Arbeitsposition der Stabilisatorbeinvorrichtung bei Passieren des vorbestimmten Ausfahrgrades die Verriegelungsanordnung automatisch in einen entriegelten Zustand zu übertragen, der eine Aufwärtsbewegung des ersten Stabilisatorbeinelements (9) in Bezug auf den Halter (8) ermöglicht.

2. Stabilisatorbeinvorrichtung nach Anspruch 1, **dadurch gekennzeichnet, dass** das Verbindungselement zumindest ein steifes längliches Element (15, 16, 15', 16'), wie eine Stange, umfasst, von der ein Ende mit der Fußplatte (7) verbunden ist.

3. Stabilisatorbeinvorrichtung nach Anspruch 2, **dadurch gekennzeichnet, dass** zumindest ein steifes längliches Element (15, 16, 15', 16') ein oberes Ende aufweist, das mit einem der beiden Verriegelungselemente verbunden ist, um dessen Bewegung bei Bewegung des zweiten Stabilisatorbeinelements (12) in Bezug auf das erste Stabilisatorbeinelement (9) zu bewirken.

4. Stabilisatorbeinvorrichtung nach einem der vorhergehenden Ansprüche, **dadurch gekennzeichnet, dass** die Verriegelungsanordnung zumindest ein Federelement (18) umfasst, das potentielle Energie in dem entriegelten Zustand speichert, und dass das Verbindungselement (15, 16) derart konfiguriert ist, das Federelement bei Ausfahren des zweiten Stabilisatorbeinelements (12) von dem ersten Stabilisatorbeinelement (9) freizugeben, um eines (14) der Verriegelungselemente in Eingriff mit dem anderen Verriegelungselement (13) zu treiben und die Verriegelungselemente in dem verriegelten Zustand unter Vorspannung zu halten.

5. Stabilisatorbeinvorrichtung nach Anspruch 4, **dadurch gekennzeichnet, dass** die Verriegelungsanordnung derart konfiguriert ist, den Verriegelungseingriff durch eine Bewegung eines (14, 14') der Verriegelungselemente quer zu der vertikalen Erstreckung des Stabilisatorbeins (6) zu erreichen.

6. Stabilisatorbeinvorrichtung nach einem der vorhergehenden Ansprüche, **dadurch gekennzeichnet, dass** das Verbindungselement (15, 16) derart konfiguriert ist, eine Bewegung des zweiten Verriegelungselements (14) bei Ausfahren und Zurückziehen des zweiten Stabilisatorbeinelements (12) in Bezug auf das erste Stabilisatorbeinelement (9) zu bewirken.

7. Stabilisatorbeinvorrichtung nach Anspruch 6, **dadurch gekennzeichnet, dass** das erste Verriegelungselement eine Ausnehmung (13) in dem ersten Stabilisatorbeinelement (9) zum Eingriff durch das zweite Verriegelungselement (14) in dem verriegelten Zustand umfasst.

8. Stabilisatorbeinvorrichtung nach einem der Ansprüche 1-5, **dadurch gekennzeichnet, dass** das Verbindungselement (15', 16') derart konfiguriert ist, eine Bewegung des ersten Verriegelungselements (14') bei Ausfahren und Zurückziehen des zweiten Stabilisatorbeinelements (12) in Bezug auf das erste Stabilisatorbeinelement (9) zu bewirken.

9. Stabilisatorbeinvorrichtung nach Anspruch 8, **dadurch gekennzeichnet, dass** das zweite Verriegelungselement eine Ausnehmung (22) in dem Halter (8) umfasst und das Verbindungselement (15', 16') derart konfiguriert ist, dass es bei Ausfahren und Zurückziehen des zweiten Stabilisatorbeinelements (12) in Bezug auf das erste Stabilisatorbeinelement (9) das erste Verriegelungselement (14) in und aus einem Verriegelungszustandseingriff in der Halterausnehmung (22) bewegt.

10. Stabilisatorbeinvorrichtung nach Anspruch 9, **dadurch gekennzeichnet, dass** das erste Verriegelungselement ein nicht kreisförmiges, wie ein ovales, plattenartiges Element ist und das zweite Verriegelungselement eine entsprechend geformte Öffnung in einem Raum in dem Halter umfasst, dass das plattenartige Element zur Aufnahme in dem Raum in der unteren Endposition des ersten Stabilisatorbeinelements konfiguriert ist, und dass die Steueranordnung derart konfiguriert ist, den Verriegelungszustand dadurch zu erreichen, dass das plattenartige Element um eine Zentralachse des ersten Stabilisatorbeinelements gedreht wird.

11. Stabilisatorbeinvorrichtung nach einem der vorhergehenden Ansprüche, **dadurch gekennzeichnet, dass** ein Kraftzylinder des zweiten Kraftelements (11) das erste Stabilisatorbeinelement (9) bildet und das zweite Stabilisatorbeinelement (12) eine Kolbenstange ist, die zu diesem Kraftzylinder gehört.

12. Stabilisatorbeinvorrichtung nach Anspruch 11, **dadurch gekennzeichnet, dass** ein oder beide Kraftelemente (10, 11) Hydraulikzylinder sind.

13. Trägeranordnung, die derart konfiguriert ist, dass sie an einem Objekt befestigt wird, wie einem Kranfahrzeug, um diesem Objekt (1) eine Abstützung von einer Stützschicht (20), auf der das Objekt aufliegt, zu geben, **dadurch gekennzeichnet, dass** die Anordnung einen Rahmenaufbau (3), der zur Befestigung an dem Objekt konfiguriert ist, sowie zumindest eine Stabilisatorbeinvorrichtung (4, 5) nach einem der vorhergehenden Ansprüche umfasst, deren Halter (8) an dem Rahmenaufbau befestigt ist.

14. Bewegbarer Kranaufbau, wie ein Kranfahrzeug, **dadurch gekennzeichnet, dass** er eine Trägeranordnung (2) nach Anspruch 13 umfasst.

## Revendications

1. Dispositif de pied de stabilisateur avec un pied de stabilisateur (6) devant être déplacé vers le bas depuis un objet (1), tel qu'un véhicule à grue, de sorte à stabiliser cet objet en supportant par une plaque d'appui (7) reliée à une extrémité inférieure du pied de stabilisateur sur une couche de support (20) sur laquelle repose l'objet, ledit dispositif comprenant :
• une pièce de maintien (8) configurée pour être fixée par rapport audit objet et pour recevoir et maintenir un premier élément (9) du pied de stabilisateur (6) déplaçable verticalement par rapport à la pièce de maintien,
• un premier élément d'entraînement (10) configuré pour agir entre ledit objet et ledit premier élément de pied de stabilisateur (9) sous la pièce de maintien (8) en faisant varier sa longueur de sorte à déplacer ledit premier élément de pied de stabilisateur (9) verticalement vers le haut et vers le bas par rapport à la pièce de maintien (8),
**caractérisé par** un second élément d'entraînement (11) faisant partie du pied de stabilisateur et configuré pour modifier la distance entre une extrémité supérieure du premier élément de pied de stabilisateur (9) et ladite plaque d'appui (7) en faisant varier sa longueur et, ainsi, déployer ou rétracter un second élément de pied de stabilisateur (12) pourvu de la plaque d'appui par rapport audit premier élément de pied de stabilisateur, et
• un agencement de verrouillage configuré, dans une position de fonctionnement du dispositif de pied de stabilisateur avec le premier élément de pied de stabilisateur (9) dans une position d'extrémité inférieure, pour verrouiller le premier élément de pied de stabilisateur par rapport à la pièce de maintien (8) contre des déplacements verticaux par rapport à celui-ci,
dans lequel l'agencement de verrouillage comprend un premier élément de verrouillage (13) sur le premier élément de pied de stabilisateur (9) et un second élément de verrouillage (14) sur la pièce de maintien (8), en ce que le dispositif comprend en outre un agencement de commande configuré pour faire passer l'agencement de verrouillage dans un état de verrouillage en causant une mise en prise réciproque desdits éléments de verrouillage et dans un état déverrouillé en libérant la mise en prise des éléments de verrouillage, et en ce que l'agencement de commande comprend un élément (15, 16, 15', 16') interconnectant l'agencement de verrouillage et ledit second élément de pied de stabilisateur (12) pour rendre l'état de l'agencement de verrouillage dépendant de la distance verticale de la plaque d'appui (7) au premier élément de pied de stabilisateur (9) en faisant passer automatiquement l'agencement de verrouillage dans ledit état de verrouillage suite au décalage de la plaque d'appui (7) vers le bas vers une position de fonctionnement du dispositif de pied de stabilisateur et en atteignant un degré d'extension déterminé du second élément de pied de stabilisateur (12) et suite à la rétraction du second élément de pied de stabilisateur depuis une position de fonctionnement du dispositif de pied de stabilisateur suite au passage dudit degré d'extension déterminé, en faisant passer automatiquement l'agencement de verrouillage dans un état déverrouillé permettant un déplacement vers le haut du premier élément de pied de stabilisateur (9) par rapport à la pièce de maintien (8).

2. Dispositif de pied de stabilisateur selon la revendication 1, **caractérisé en ce que** ledit élément d'interconnexion comprend au moins un élément rigide allongé (15, 16, 15', 16'), tel qu'une tige, ayant une extrémité raccordée à ladite plaque d'appui (7).

3. Dispositif de pied de stabilisateur selon la revendication 2, **caractérisé en ce que** ledit au moins un élément rigide allongé (15, 16, 15', 16') a une extrémité supérieure raccordée à l'un desdits deux éléments de verrouillage pour causer un déplacement de celui-ci suite au déplacement du second élément de pied de stabilisateur (12) par rapport au premier élément de pied de stabilisateur (9).

4. Dispositif de pied de stabilisateur selon l'une quelconque des revendications précédentes, **caractérisé en ce que** l'agencement de verrouillage comprend au moins un élément de ressort (18) stockant une énergie potentielle dans ledit état déverrouillé, et **en ce que** ledit élément d'interconnexion (15, 16) est configuré pour libérer l'élément de ressort suite à l'extension du second élément de pied de stabilisateur (12) depuis le premier élément de pied de stabilisateur (9) pour pousser l'un (14) desdits éléments de verrouillage à se mettre en prise avec l'autre élément de verrouillage (13) et garder les éléments de verrouillage dans l'état de verrouillage sous précontrainte.

5. Dispositif de pied de stabilisateur selon la revendication 4, **caractérisé en ce que** l'agencement de verrouillage est configuré pour obtenir ladite mise en prise de verrouillage par un déplacement de l'un (14, 14') des éléments de verrouillage transversalement à l'extension verticale du pied de stabilisateur (6).

6. Dispositif de pied de stabilisateur selon l'une quelconque des revendications précédentes, **caractérisé en ce que** l'élément d'interconnexion (15, 16) est configuré pour causer un déplacement dudit second élément de verrouillage (14) suite à l'extension et la rétractation du second élément de pied de stabilisateur (12) par rapport au premier élément de pied de stabilisateur (9).

7. Dispositif de pied de stabilisateur selon la revendication 6, **caractérisé en ce que** ledit premier élément de verrouillage comprend un évidement (13) dans le premier élément de pied de stabilisateur (9) devant être mis en prise par le second élément de verrouillage (14) dans ledit état de verrouillage.

8. Dispositif de pied de stabilisateur selon l'une quelconque des revendications 1 à 5, **caractérisé en ce que** l'élément d'interconnexion (15', 16') est configuré pour causer un déplacement du premier élément de verrouillage (14') suite à l'extension et la rétractation du second élément de pied de stabilisateur (12) par rapport au premier élément de pied de stabilisateur (9).

9. Dispositif de pied de stabilisateur selon la revendication 8, **caractérisé en ce que** le second élément de verrouillage comprend un évidement (22) dans la pièce de maintien (8) et l'élément d'interconnexion (15', 16') est configuré pour, suite à l'extension et la rétractation du second élément de pied de stabilisateur (12) par rapport au premier élément de pied de stabilisateur (9), déplacer le premier élément de verrouillage (14') dans et en dehors de la mise en prise d'état de verrouillage dans l'évidemment (22) de la pièce de maintien.

10. Dispositif de pied de stabilisateur selon la revendication 9, **caractérisé en ce que** ledit premier élément de verrouillage est un élément en forme de plaque non circulaire, par exemple ovale, et le second élément de verrouillage comprend une ouverture de forme correspondante dans une chambre dans la pièce de maintien, **en ce que** ledit élément en forme de plaque est configuré pour être reçu dans ladite chambre dans la position d'extrémité inférieure du premier élément de pied de stabilisateur, et **en ce que** l'agencement de commande est configuré pour obtenir ledit état de verrouillage en causant une rotation dudit élément en forme de plaque autour d'un axe central du premier élément de pied de stabilisateur.

11. Dispositif de pied de stabilisateur selon l'une quelconque des revendications précédentes, **caractérisé en ce qu'**un cylindre d'entraînement dudit second élément d'entraînement (11) forme le premier élément de pied de stabilisateur (9) et le second élément de pied de stabilisateur (12) est une tige de piston faisant partie de ce cylindre d'entraînement.

12. Dispositif de pied de stabilisateur selon la revendication 11, **caractérisé en ce que** l'un desdits éléments d'entraînement ou les deux (10, 11) sont des cylindres hydrauliques.

13. Agencement de support configuré pour être fixé à un objet, tel qu'un véhicule à grue, de sorte à fournir à cet objet (1) un support depuis une couche de support (20) sur laquelle repose l'objet, **caractérisé en ce que** l'agencement comprend une structure de cadre (3) configurée pour être fixée audit objet et au moins un dispositif de pied de stabilisateur (4, 5) selon l'une quelconque des revendications précédentes ayant la pièce de maintien (8) de celui-ci reliée à la structure de cadre.

14. Construction de grue déplaçable, telle qu'un véhicule à grue, **caractérisée en ce qu'**elle comprend un agencement de support (2) selon la revendication 13.
